# EUROPEAN PATENT SPECIFICATION

(11) **EP 3 315 418 B1**
(45) Date of publication and mention of the grant of the patent: **30.12.2020**
(21) Application number: 17198543.5
(22) Date of filing: 26.10.2017
(51) Int. Cl.: B64F 5/10, B64C 3/00, B64C 1/26

(54) **AUTOMATED SYSTEM AND METHOD TO MANUFACTURE AERONAUTIC JUNCTION PARTS**
AUTOMATISIERTES SYSTEM UND VERFAHREN ZUR HERSTELLUNG VON AERONAUTISCHEN ANSCHLUSSTEILEN
SYSTÈME ET PROCÉDÉ AUTOMATISÉS DE FABRICATION DE PIÈCES DE JONCTION AÉRONAUTIQUE

(30) Priority: 26.10.2016 US 201615335202
(43) Date of publication of application: 02.05.2018
(73) Proprietor: Embraer S.A., 12227-901 São José Dos Campos SP (BR)
(72) Inventor: Nakashima, Megumi, 12227-901 Sao José Dos Campos (BR); Da Silva, Erik Spada, 12227-901 Sao José Dos Campos (BR); Lepri, Lincoln José, 12227-901 Sao José Dos Campos (BR); Saito, Pércio Roiz, 12227-901 Sao José Dos Campos (BR)
(74) Representative: Liesegang, Eva

(56) References cited:
- EP-A1- 3 093 723
- EP-A2- 0 453 391
- EP-A2- 2 533 167
- WO-A1-2014/168681
- US-A- 3 605 552
- US-A1- 2002 048 494
- US-A1- 2002 078 545
- US-A1- 2008 205 763
- US-A1- 2015 025 667

## Description

### CROSS-REFERENCE TO RELATED APPLICATIONS

None.

### STATEMENT REGARDING FEDERALLY SPONSORED RESEARCH OR DEVELOPMENT

None.

### FIELD

This example non-limiting technology relates to methods and systems for manufacturing parts, and more particularly to automatic best positioning and fitting algorithms for parts assembly. Still more particularly, the example non-limiting technology relates to using best positioning and fitting algorithms and techniques to construct aircraft parts including but not limiting to wings. Still more particularly, the example non-limiting technology provides a computer system and method providing a software controlled process that automatically measures and generates a milling program to effect machine shaping to minimize shim between junction parts.

### BACKGROUND

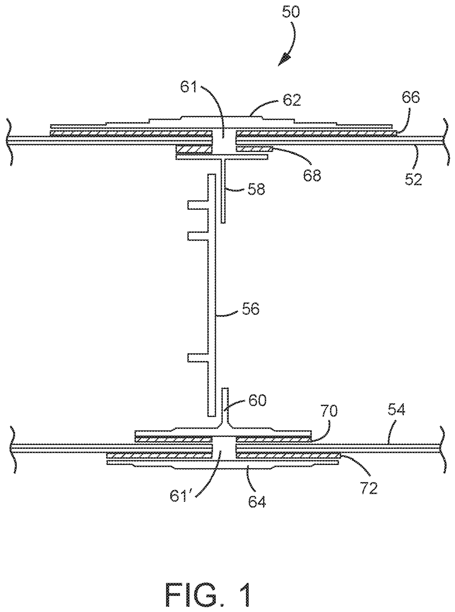

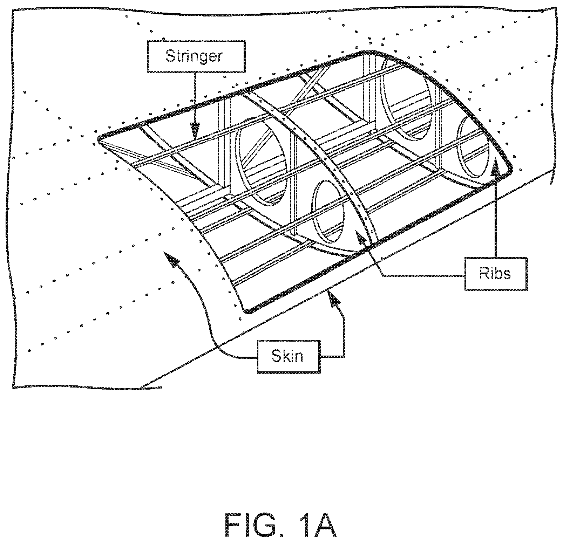

Wings are airfoils that create lift when they move through the air. Wings can have many different designs, shapes and configurations. To achieve desired weight and performance, most large aircraft wings are constructed as hollow structures made of aluminum and possibly other materials. See Fig. 1A. The skin, typically thin aluminum sheets attached to the wing structure by rivets or other fasteners, provides the surface that is in contact with the air. Within the wing structure, ribs running from the wing's leading edge to its trailing edge (i.e., across the wing) support the skin and transfer the force from the skin to structural members within the wing structure such as longitudinal spars and stringers that run the span of the wing. See Federal Aviation Administration, Aviation Maintenance Technical Handbook, Vol. 1 ("Airframe"), Chapters 1 and 4, FAA-II-8083-31 (2012) https://www.faa.gov/regulations_policies/handbooks_manuals/aircraft/amt_airfra me_handbook/, for examples of wing junctions, which are not part of the present invention.

In a more specific example, Fig. 1 shows a cross-sectional view of an example non-limiting wing design including a shear joint type semi-wing junction. The Fig. 1 view shows the semi wing structure as if cut from top to bottom looking for example from the wing's leading edge to the wing's trailing edge, with the upper skin 52 defining the top wing surface, and the lower skin 54 defining the lower wing surface. Gaps between Right and Left Upper skins are shown by 61 and gaps between Right and Left Lower skin are indicated by 61'. Upper skin 52 and lower skin 54 are held and supported by structure including or consisting of shims, a rib and splices. In particular, a rib 0 (56) connects an upper T profile member 58 which attaches to the upper wing structure. Similarly, a lower T profile member 60 attaches the rib 0 (56) to the lower wing structure. Rib 0 (56) is the aircraft "Y" position reference. The T profile elements 58, 60 are in turn bonded to splice elements 62, 64. Namely, the upper T profile 58 is bonded to an upper splice 62, and the lower T profile 60 is bonded to a lower splice 64. The rib 0 (56) thus holds the upper wing structure to the lower wing structure, with splice elements 62, 64 retaining the skin 52, 54 to T profile elements 58, 60. The splice elements 62, 64 splice together different parts of the semi-wing to form a unified integrated structure.

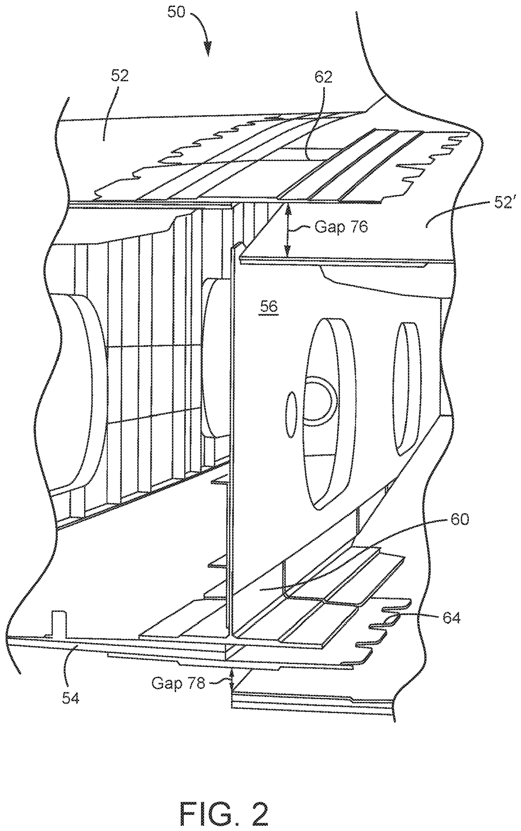

To avoid bending and shear stress, it is desirable to have virtually no gap between upper splices 62, 64 and skin 52, 54. For example, Fig. 2 shows a simulation with gaps 76, 78 between the junction parts. In particular, there is a gap 76 between the upper splice 62 and the skin 52, and a gap 78 exists between the lower shear element 64 and adjacent structures.

Shims 66, 68, 70, 72 have conventionally been used in the past to fill such gaps between the junction parts. Thus, a shim 66 is typically disposed between upper splice 62 and skin 52; a shim 72 is typically disposed between lower splice 64 and skin 54; a shim 68 is typically disposed between skin 52 and T profile element 58; and a shim 70 is typically disposed between skin 54 and T profile element 60. See Fig. 1.

During semi-wing junction assembly, both semi-wings are aligned with a best algorithm that minimizes deviations in aerodynamic and structural specifications. As semi-wings are not identical to each other, gaps between both parts are generated and shims 66, 68, 70, 72 are manufactured and inserted to avoid bending and shear stress. It would be desirable to avoid the need for shims.

A known process for assembling parts without the need to insert shims during the process starts with gap measurement between a first part and a theoretical model. A new model of the gap insertion is created (manufactured) and placed on the tooling of the part to be joined. Once the second part has the shape of the gap and it is aligned to first part, the gap between parts is eliminated. However, such a process can have disadvantages such as:
for each shipset junction, a new insertion on the tooling must be manufactured to minimize the gap; and
the production cycle (time it takes to manufacture the assembly) increases because the junction depends on measurement of the first part before manufacturing the second part.

US 2002/078545 A1 describes a system for assembly of aircraft wing components. A machine controller operates based on a program containing design information of the assembly of the wing components.

### BRIEF DESCRIPTION OF THE DRAWINGS

The following detailed description of exemplary non-limiting illustrative embodiments is to be read in conjunction with the drawings of which:
Figure 1 shows example non-limiting parts used at the semi-wing junction including rib 0, lower splice, lower T profile, upper splice and upper T profile.
Figure 1A shows an example wing structure.
Figure 2 shows a simulation of an upper skin and upper splice with gaps between the semi-wing joint.
Figure 3 shows a current process having a manual upper skin and upper splice with a gap between semi-wing joint.
Figure 4 shows an improved process sequence of a non-limiting embodiment including automatic measurement, automatic milling program generation and final milling.
Fig. 4A shows an example non-limiting system configuration.
Figure 5 shows a front view of a final result of Splice and T Profile after automatic junction of semi-wing process.
Fig. 6A shows defining a standard model.
Fig. 6B shows a milling machine that can be used to manufacture parts with overmaterial.
Fig. 6C shows an example user interface for the Fig. 6B milling machine.
Fig. 6D shows example 5 axis automatic measurement system for making measures that can be compared to a standard.
Fig. 6E shows an example generated milling program.
Fig. 6F shows exampling further milling of junction parts so final assembly can be with no gaps or need for shims.
Fig. 6G shows an example new generated surface using a multi-section or similar procedure from B-Splines.

### DETAILED DESCRIPTION OF NON-LIMITING EMBODIMENTS

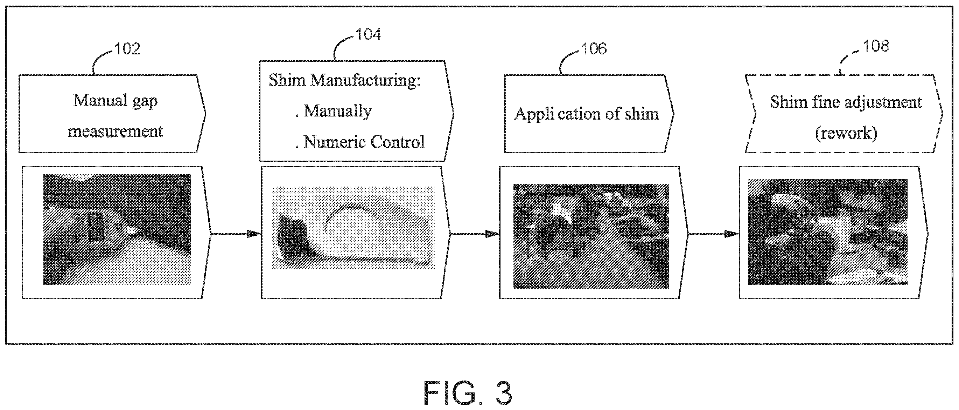

While all-manual techniques were used in the past to manufacture suitable shims, more recently scanning techniques have been used to size the thickness, shape and extent of the required shims. In particular, the current process uses manual procedures to measure gaps and gather data to be sent to manufacturing analysis. See Fig. 3 block 102. Based on those extracted points, a reference surface is generated to define milling program trajectory and parameters. New shims are created for every different gap to be filled in the junction. Fig. 3 block 104. Once shims are milled, they are applied to the product (Fig. 3 block 106), checked and final adjustment is made to fit with minimum gap in the product (Fig. 3 block 108). Due to product large dimension, this manual process is not effective and inaccurate. Indeed, in this particular semi-wing junction the main stress is shear type, where shims thicker than a certain thickness are not acceptable.

Further improvements are needed.

In one example non-limiting embodiment, an automated system and method is used to integrate parts for assemblies semi-wings, after the best positioning algorithm is performed between the parts.

The example non-limiting embodiment provides a process that uses software to automatically measure and generate a milling program to machine shape to minimize shim thicknesses between parts to under a certain thickness specification such as for example 0.3 mm.

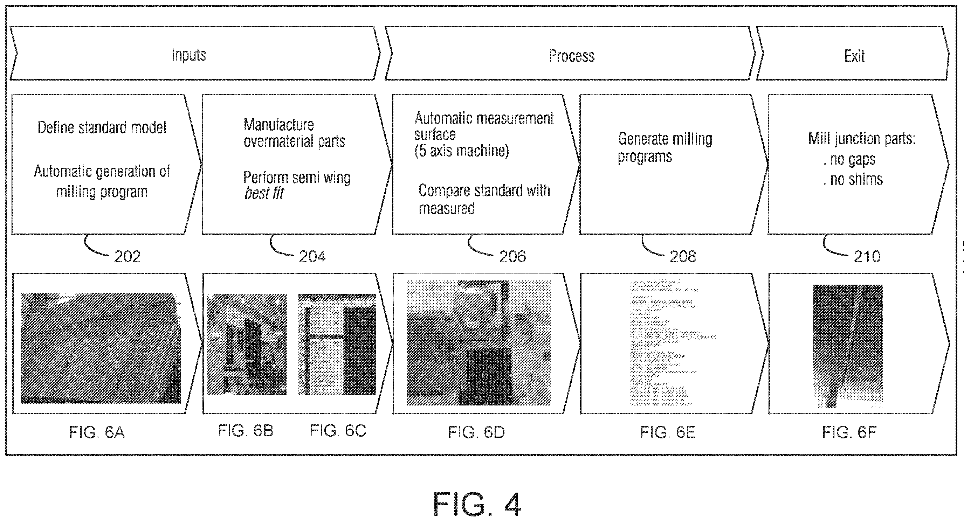

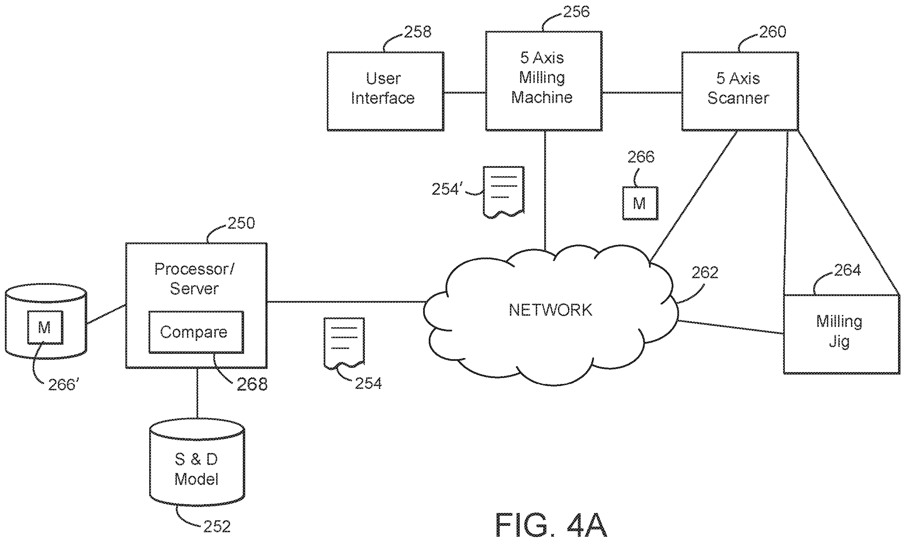

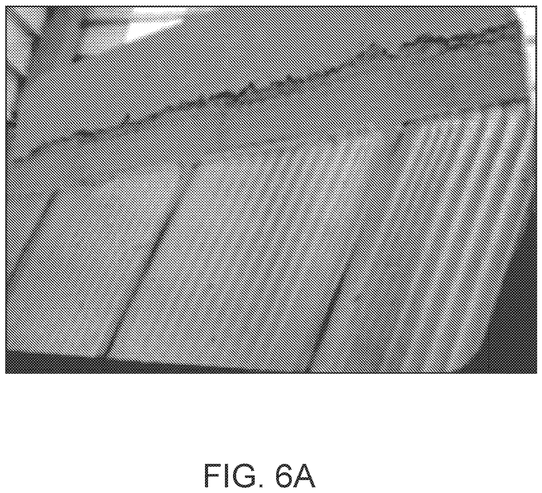

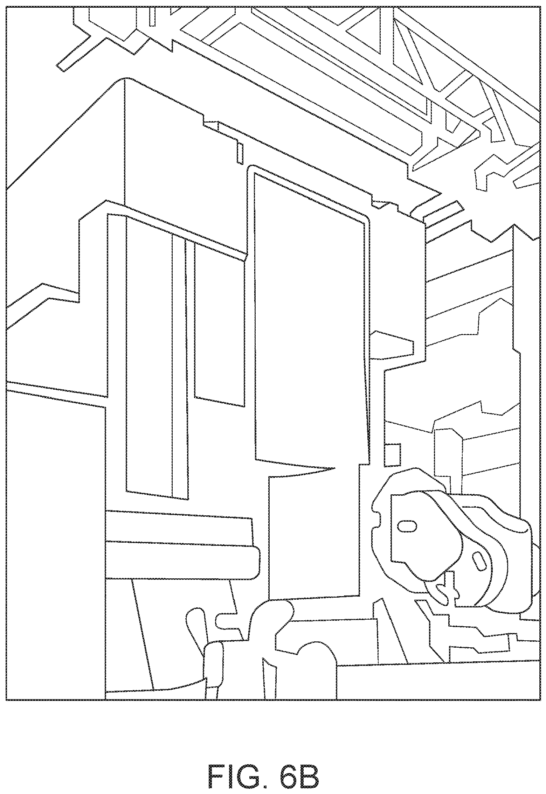

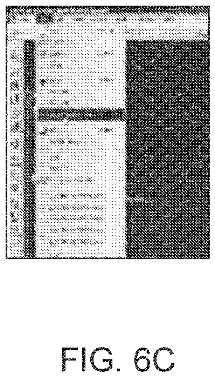

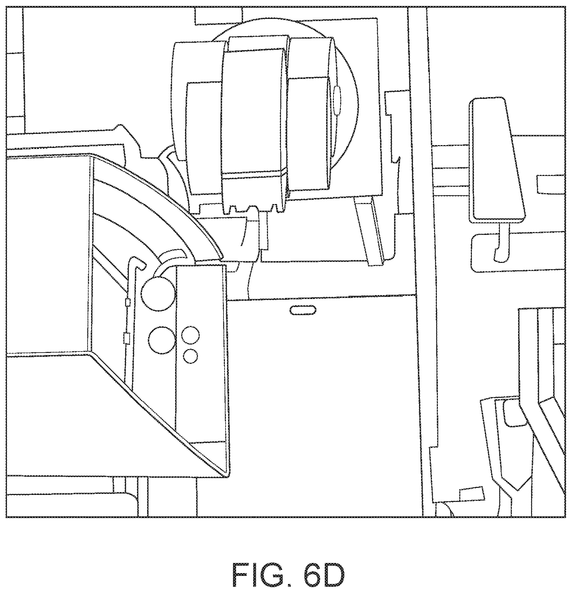

In one example non-limiting embodiment, every junction part is manufactured with overmaterial such as e.g., 5mm of overmaterial. Such manufacturing can be controlled and performed using a server 250, a standard model 252, a milling program 254 and a 5 axis milling machine 256 as shown in Fig. 4A and see also Fig. 6A-6C. Each part is then placed on a milling jig 264 and a milling template is set with a standard feed rate, rotation and cutting thickness. The milling machine measures, with a laser based interferometer or other scanning technique 260 (see Fig. 6D), the product reference (semi-wing) and creates a data base M with a points cloud (i.e., a cloud of points that define the surface profile based on the laser or other scanning). (266, 266')

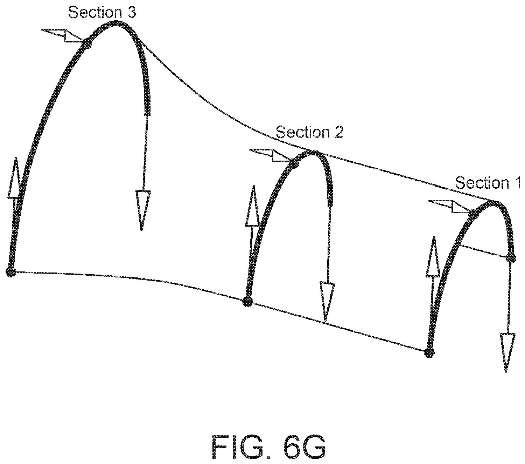

Dedicated software stored in non-transitory memory and running on a server/processor 250 is used to compare (block 268) the measured product "as built" with the model to generate a new trajectory milling program to fill the gap between parts using a new generated surface using a Multi-Section or similar procedure (see Fig. 6G), from B-Splines. B-Splines are generated with Points Clouds measured by scanning technique 260. A well-known B-Spline algorithm can be used such as Carl de Boor's "B(asic) Spline Basics" and Hollig et al., "Approximation and Modelling with B-Splines", Society for Industrial and Applied Mathematics (November 13, 2013.

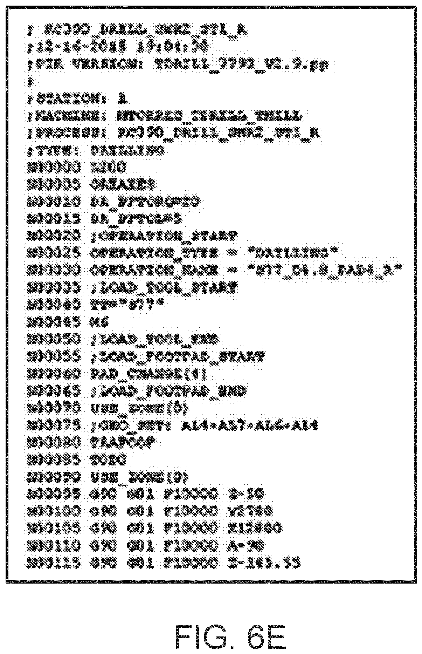

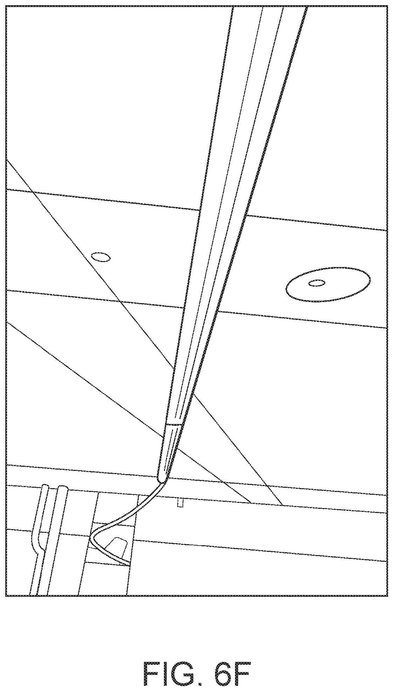

Once the program is generated (new trajectories) and post processed (e.g., translated into machine language, G code, items 254, 254', see also Fig. 6E), the code is sent to the 5-axis milling machine 256 to perform the overmaterial milling or adjustment on already milled parts with overmaterial (see Fig. 6F).

After final milling, the 5-axis milling machine drills four reference or reference holes for each part that will be the same reference done by the same 5-axis milling machine on the semi-wings. The milled part is placed on the semi-wing through reference holes drilled previously, and the machine proceeds with the drilling process.

Figure 4 shows this overall process in more detail. Initially, a standard model is defined (block 202) and a milling program is automatically generated. The parts are then manufactured with overmaterial as explained above, and a best fit algorithm is performed to fit the semi wing parts together (block 204). The inner and outer surface of the semi wings are measured (scanned) automatically with a 5-axis machine and models defining the standard are compared with the measured surfaces (block 206). Milling programs for additional milling operations are generated for each part (block 208) and used to mill junction parts that can be assembled with no gaps and thus no shims (block 210).

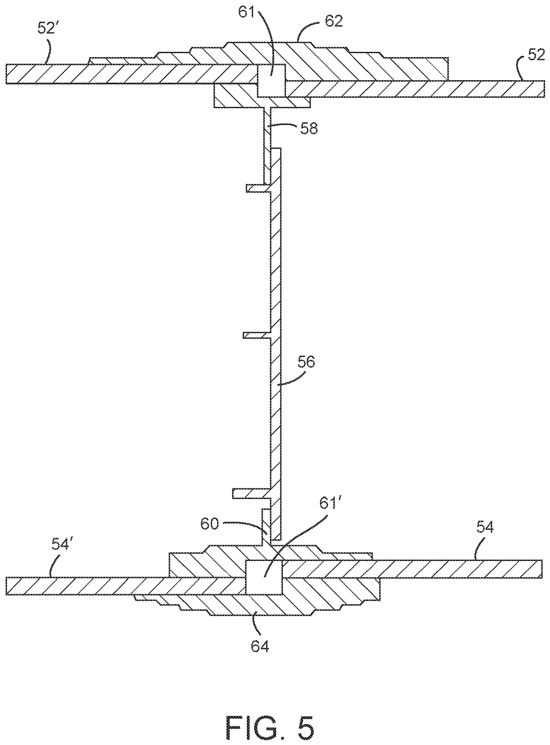

Benefits of the example not being part of the present invention disclose:
1. Cycle reduction:
   a. Overmaterial parts are fine adjusted after measuring the junction parts in the shop floor. Once it is approved, it is sent.
   b. Automatic measurement of the semi-wing surface.
   c. Automatic milling program generation.
2. Structural enhancement:
   a. No shims insertion due to shape generated on the overmaterial part (see Fig. 5). This avoids high shear stress.
   b. Minimum gap between parts below 0.3mm.

## Claims

1. An automated method of manufacturing wing junction parts comprising:
(a) milling aircraft wing junction parts with overmaterial (204);
(b) scanning the wing junction parts; (206);
(c) using at least one processor, comparing the parts scans with a model using a B-Spline algorithm;
(d) based on the comparison between the parts scans and the model, generating a trajectory milling program (208); to fill gaps between the wing junction parts using a new generated surface using a Multi-section procedure from B-Spline; and
(e) further milling the wing junction parts (210); using the trajectory milling program to remove overmaterial, thereby minimizing gaps between parts and eliminating a corresponding need for shimming to fill said gaps.

2. The method of claim 1 wherein scanning comprises scanning the wing junction parts with a laser based interferometer.

3. The method of claim 1 or 2 wherein the scanning creates a data base with points clouds that define the surface profiles of the wing junction parts based on the scanning.

4. The method of one of the preceding claims wherein the processor automatically generates a milling program to machine shape the wing junction parts to minimize gaps thicknesses between the wing junction parts to under a certain thickness specification.

5. The method of claim 4 wherein the thickness specification is 0.3 mm.

6. The method of one of the preceding claims wherein the milling provides the wing junction parts with 5 mm or less of overmaterial.

7. The method of one of the preceding claims wherein the method reduces cycle time by fine adjusting the overmaterial after measuring the wing junction parts inside the semi-wing junction area using automatic scanning and automatic milling program generation and performing a B-Spline algorithm to generate multi-section surfaces.

8. The method of one of the preceding claims wherein the method enhances structure by inserting no shims due to shape generated on the wing junction parts thereby avoiding high shear stress and providing a minimum gap between parts below 0.3 mm.

9. An automated system for manufacturing wing junction parts for aircraft wings, the system comprising:
a milling machine programmed to mill the aircraft wing junction parts with overmaterial;
a scanner configured to scan the wing junction parts; and
at least one processor operatively coupled to the scanner, the at least one processor comparing the scans with a model using a B-Spline algorithm and, based on the comparison, generating a trajectory milling program to fill gaps between the wing junction parts using a new generated surface using a Multi-section procedure from B-Spline;
the same or a different milling machine being configured to use the generated trajectory milling program to again mill the wing junction parts thereby removing overmaterial to minimize gaps between parts and eliminate the corresponding need for shimming.

10. The system of claim 9 wherein the scanner comprises a laser based interferometer.

11. The system of one of claims 9 to 10 wherein the processor is configured to control the system to perform the method of one of claims 1 to 7.

## Patentansprüche

1. Automatisiertes Verfahren zum Herstellen von Flügelverbindungsteilen, das Folgendes umfasst:
(a) Fräsen von Luftfahrzeugflügelverbindungsteilen mit Übermaterial (204);
(b) Scannen der Flügelverbindungsteile (206);
(c) unter Verwendung von mindestens einem Prozessor Vergleichen der Teilescans mit einem Modell unter Verwendung eines B-Spline-Algorithmus;
(d) auf Basis des Vergleichs zwischen den Teilescans und dem Modell Erzeugen eines Leitkurvenfräsprogramms (208), um unter Verwendung einer neu erzeugten Fläche unter Verwendung einer Mehrabschnittsprozedur von B-Spline Spalte zwischen Flügelverbindungsteilen zu füllen; und
(e) weiteres Fräsen der Flügelverbindungsteile (210) unter Verwendung des Leitkurvenfräsprogramms, um Übermaterial zu entfernen, dadurch Minimieren von Spalten zwischen Teilen und Eliminieren einer entsprechenden Notwendigkeit des Unterfütterns, um die Spalte zu füllen.

2. Verfahren nach Anspruch 1, wobei das Scannen das Scannen der Flügelverbindungsteile mit einem laserbasierten Interferometer umfasst.

3. Verfahren nach Anspruch 1 oder 2, wobei das Scannen eine Datenbank mit Punktwolken erstellt, die die Flächenprofile der Flügelverbindungsteile auf Basis des Scannens definieren.

4. Verfahren nach einem der vorhergehenden Ansprüche, wobei der Prozessor automatisch ein Fräsprogramm zum maschinellen Formen der Flügelverbindungsteile erzeugt, um Spaltdicken zwischen den Flügelverbindungsteilen auf unter eine bestimmte Dickenspezifikation zu minimieren.

5. Verfahren nach Anspruch 4, wobei die Dickenspezifikation 0,3 mm beträgt.

6. Verfahren nach einem der vorhergehenden Ansprüche, wobei das Fräsen die Flügelverbindungsteile mit Übermaterial von 5 mm oder weniger versieht.

7. Verfahren nach einem der vorhergehenden Ansprüche, wobei das Verfahren durch Feinjustieren des Übermaterials nach Messen der Flügelverbindungsteile im Halbflügelverbindungsbereich unter Verwendung des automatischen Scannens und einer automatischen Fräsprogrammerzeugung und Durchführen eines B-Spline-Algorithmus, um Mehrabschnittsflächen zu erzeugen, eine Zykluszeit reduziert.

8. Verfahren nach einem der vorhergehenden Ansprüche, wobei das Verfahren eine Strukturverbesserung erreicht, indem wegen der an den Flügelverbindungsteilen erzeugten Form keine Beilagscheiben eingesetzt werden, wodurch eine hohe Scherbeanspruchung vermieden und ein minimaler Spalt zwischen Teilen von weniger als 0,3 mm bereitgestellt wird.

9. Automatisiertes System zum Herstellen von Flügelverbindungsteilen für Luftfahrzeugflügel, wobei das System Folgendes umfasst:
eine Fräsmaschine, die zum Fräsen von Luftfahrzeugflügelverbindungsteilen mit Übermaterial programmiert ist;
einen Scanner, der dazu ausgelegt ist, die Flügelverbindungsteile zu scannen; und
mindestens einen Prozessor, der an den Scanner wirkgekoppelt ist, wobei der mindestens eine Prozessor die Scans unter Verwendung eines B-Spline-Algorithmus mit einem Modell vergleicht und auf Basis des Vergleichs ein Leitkurvenfräsprogramm erzeugt, um unter Verwendung einer neu erzeugten Fläche unter Verwendung einer Mehrabschnittsprozedur von B-Spline Spalte zwischen Flügelverbindungsteilen zu füllen;
wobei dieselbe oder eine andere Fräsmaschine dazu ausgelegt ist, das erzeugte Leitkurvenfräsprogramm zu verwenden, um die Flügelverbindungsteile erneut zu fräsen, wodurch Übermaterial entfernt wird, um Spalte zwischen Teilen zu minimieren und die entsprechende Notwendigkeit des Unterfütterns zu eliminieren.

10. System nach Anspruch 9, wobei der Scanner ein laserbasiertes Interferometer umfasst.

11. System nach einem der Ansprüche 9 bis 10, wobei der Prozessor dazu ausgelegt ist, das System zum Durchführen des Verfahrens nach einem der Ansprüche 1 bis 7 zu steuern.

## Revendications

1. Procédé automatisé de fabrication de pièces de jonction d'aile, comprenant les étapes ci-dessous consistant à :
(a) fraiser des pièces de jonction d'aile d'aéronef avec un excédent de matière (204) ;
(b) balayer les pièces de jonction d'aile (206) ;
(c) en utilisant au moins un processeur, comparer les balayages de pièces à un modèle en utilisant un algorithme de courbe B-Spline ;
(d) sur la base de la comparaison entre les balayages de pièces et le modèle, générer un programme de fraisage de trajectoire (208) en vue de combler des vides entre les pièces de jonction d'aile, en utilisant une nouvelle surface générée à l'aide d'une procédure multi-section à partir de la courbe B-Spline ; et
(e) poursuivre le fraisage des pièces de jonction d'aile (210) en utilisant le programme de fraisage de trajectoire pour enlever tout excédent de matière, ce qui permet de minimiser par conséquent les vides entre les pièces et d'éliminer tout besoin correspondant de calage pour combler lesdits vides.

2. Procédé selon la revendication 1, dans lequel l'étape de balayage consiste à balayer les pièces de jonction d'aile au moyen d'un interféromètre à laser.

3. Procédé selon la revendication 1 ou 2, dans lequel le balayage crée une base de données avec des nuages de points qui définissent les profils de surface des pièces de jonction d'aile sur la base du balayage.

4. Procédé selon l'une quelconque des revendications précédentes, dans lequel le processeur génère automatiquement un programme de fraisage pour former par usinage les pièces de jonction d'aile afin de minimiser des épaisseurs de vides entre les pièces de jonction d'aile jusqu'à une spécification d'épaisseur donnée.

5. Procédé selon la revendication 4, dans lequel la spécification d'épaisseur est de 0,3 mm.

6. Procédé selon l'une quelconque des revendications précédentes, dans lequel le fraisage fournit aux pièces de jonction d'aile un excédent de matière de 5 mm ou moins.

7. Procédé selon l'une quelconque des revendications précédentes, dans lequel le procédé réduit un temps de cycle en ajustant finement l'excédent de matière après avoir mesuré les pièces de jonction d'aile au sein de la zone de jonction de demi-ailes en utilisant un balayage automatique et une génération de programme de fraisage automatique, et en mettant en œuvre un algorithme de courbe B-Spline en vue de générer des surfaces multi-sections.

8. Procédé selon l'une quelconque des revendications précédentes, dans lequel le procédé améliore la structure en n'insérant aucune cale en raison de la forme générée sur les pièces de jonction d'aile, ce qui permet d'éviter par conséquent une contrainte de cisaillement élevée et de fournir un vide minimum entre les pièces qui est inférieur à 0,3 mm.

9. Système automatisé pour fabriquer des pièces de jonction d'aile pour des ailes d'aéronefs, le système comprenant :
une fraiseuse programmée pour fraiser les pièces de jonction d'aile d'aéronef avec un excédent de matière ;
un scanneur configuré de manière à balayer les pièces de jonction d'aile ; et
au moins un processeur couplé fonctionnellement au scanneur, ledit au moins un processeur comparant les balayages à un modèle en utilisant un algorithme de courbe B-Spline, et, sur la base de la comparaison, générant un programme de fraisage de trajectoire pour combler des vides entre les pièces de jonction d'aile en utilisant une nouvelle surface générée à l'aide une procédure multi-section à partir de la courbe B-Spline ;
dans lequel la même fraiseuse ou une fraiseuse différente est configurée de manière à utiliser le programme de fraisage de trajectoire généré afin de poursuivre le fraisage des pièces de jonction d'aile, ce qui enlève par conséquent l'excédent de matière en vue de minimiser les vides entre les pièces et d'éliminer tout besoin correspondant de calage.

10. Système selon la revendication 9, dans lequel le scanneur comprend un interféromètre à laser.

11. Système selon l'une quelconque des revendications 9 à 10, dans lequel le processeur est configuré de manière à commander le système de manière à mettre en œuvre le procédé selon l'une quelconque des revendications 1 à 7.
